(19) Europäisches Patentamt
European Patent Office
Office européen des brevets

(11) **EP 4 383 180 B1**

(12) **EUROPEAN PATENT SPECIFICATION**

(45) Date of publication and mention
of the grant of the patent:
**25.12.2024 Bulletin 2024/52**

(21) Application number: **23213355.3**

(22) Date of filing: **30.11.2023**

(51) International Patent Classification (IPC):
**G06Q 50/04** (2012.01)    **G06Q 10/06** (2023.01)
**G06Q 30/0201** (2023.01)

(52) Cooperative Patent Classification (CPC):
**G06Q 50/04; G06Q 10/06; G06Q 30/0201**

(54) **SYSTEMS AND METHODS FOR IDENTIFYING EQUIPMENT FOR PELLETIZATION**

SYSTEME UND VERFAHREN ZUR IDENTIFIZIERUNG VON AUSRÜSTUNG ZUR PELLETISIERUNG

SYSTÈMES ET PROCÉDÉS D'IDENTIFICATION D'ÉQUIPEMENT POUR LA PELLETISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.12.2022 IN 202221070709**

(43) Date of publication of application:
**12.06.2024 Bulletin 2024/24**

(73) Proprietor: **Tata Consultancy Services Limited Maharashtra (IN)**

(72) Inventors:
• **SAHU, SWATI**
  **411013 Pune, Maharashtra (IN)**

• **MASAMPALLY, VISHNU SWAROOPJI**
  **500081 Hyderabad, Telangana (IN)**
• **BUDDHIRAJU, VENKATA SUDHEENDRA**
  **411013 Pune, Maharashtra (IN)**
• **RUNKANA, VENKATARAMANA**
  **411013 Pune, Maharashtra (IN)**
• **MUTHACHIKAVIL, ASWIN VINOD**
  **411013 Pune, Maharashtra (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(56) References cited:
  **US-A1- 2009 299 509    US-A1- 2022 207 217**

**Description**

CROSS-REFERENCE TO RELATED APPLICATIONS AND PRIORITY

The present application claims priority to Indian application no. 202221070709, filed on December 7, 2022.

TECHNICAL FIELD

The disclosure herein generally relates to pelletization, and, more particularly, to systems and methods for identifying equipment for pelletization.

BACKGROUND

Pelletization is a size enlargement process in which fine particles are combined to form coarse particles. The purpose of pelletization can vary depending on the material to be pelletized. The process is used in various field including coal, fertilizers, pharmaceutical and food processing. In general, particles are pelletized for easy handling of product. The size range of particles to be pelletized can vary from sub-micron ($<10^{-6}$ m) to mm. To design pelletization process for a specific feed size and product requirement, one must test various equipment available in market. This involves performing market survey, approaching individual manufacture/vendor for equipment testing, conducting experiments at vendor site, comparing different equipment performance in terms of pelletized product quality and process requirements. This is a cumbersome process and can take months if not years. This is also a resource intensive process as it involves transportation of materials and equipment for conducting trials. This is a costly affair for not only the company/entity that is searching for pelletization equipment but also for the vendors of these equipment. Moreover, the trials conducted on each equipment are limited in number due to resource constraint. The operating parameter for conducting trials on equipment is based on heuristics. This may or may not identify the best set of operating parameters to produce desired product. Document (US2009/299509A1) describes a method and device for simulating a control and/or machine behavior of machine tools or production machines, in which data concerning the machine tools or production machines are transmitted to a simulation device by means of an intranet and/or by means of an internet. The data can be automatically transmitted to the simulation device, whereby particularly after a change in an item of data from the quantity of data, this item of data is transmitted to the simulation device (Abstract). Document (US 2022/207217A1) discloses a simulation method and system for real-time simulation using digital twin agent are disclosed. The simulation method may include generating a digital twin object cyberizing a manufacturing resource required for a process based on manufacturing resource information, mapping a learning model onto the digital twin object and transmitting the learning model mapped onto the digital twin object to a digital twin agent, receiving information analyzed by using the learning model from the digital twin object of the digital twin agent, and performing a simulation based on the received information (Abstract).

SUMMARY

Embodiments of the present disclosure present technological improvements as solutions to one or more of the above-mentioned technical problems recognized by the inventors in conventional systems.

For example, in one aspect, there is provided a processor implemented method for identifying equipment for pelletization is as defined in claim 1.

In another aspect, there is provided a processor implemented system for identifying equipment for pelletization is as defined in claim 6.

In yet another aspect, there are provided one or more non-transitory machine-readable information storage mediums comprising one or more instructions which when executed by one or more hardware processors cause a method for identifying equipment for pelletization is as defined in claim 11.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for identifying equipment for pelletization, in accordance with an embodiment of the present disclosure.

FIG. 2 depicts an exemplary high level block diagram of the system of FIG. 1 for identifying equipment for pelletization, in accordance with an embodiment of the present disclosure.

FIG. 3 depicts an exemplary flow chart illustrating a method for identifying equipment for pelletization, using the systems of FIG. 1-2, in accordance with an embodiment of the present disclosure.

FIG. 4 depicts a graphical representation illustrating particle size distribution (also referred as feed size distribution or size distribution associated with the feed), in accordance with an embodiment of the present disclosure.

FIG. 5 depicts a graphical representation illustrating cumulative particle size distribution (also referred as cumulative feed size distribution or cumulative size distribution associated with the feed), in accordance with an embodiment of the present disclosure.

FIG. 6 depicts a flow-chart illustrating a method of simulating the feed size distribution and the specification of the product using each equipment simulator comprised in the systems of FIGS. 1-2 to obtain the plurality of operating spaces, in accordance with an embodiment of the present disclosure.

FIG. 7 depicts a block diagram illustrating a process of generating a tuned mechanistic model using the systems of FIGS. 1-2, in accordance with an embodiment of the present disclosure.

FIG. 8 shows standard operating conditions to be considered for designing granulation experiments, in accordance with an embodiment of the present disclosure.

FIG. 9 depicts experimental procedure for granulation experiment, in accordance with an embodiment of the present disclosure.

FIGS. 10A-10B show a comparison of predicted product size distribution with experimentally obtained product size distribution, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The problem mentioned above can be greatly reduced if there was a software tool that can help in comparing performance of various pelletization equipment for a specific feed and product specification without conducting many experiments. While there are several numerical models of individual pelletization equipment available in literature, these lack in identifying operating conditions to obtain desired product for multiple equipment. Also, while selecting the equipment there may be multiple criteria in addition to product quality that have to accounted while deciding suitable equipment. Some example criteria are cost of equipment, maintenance cost, operational cost, ease of cleaning, equipment, and operating compliance, etc. Therefore, embodiments of the present disclosure provide system and method that compare equipment based on product quality as well as equipment criteria to decide a suitable/optimal equipment that can save cost of experimentation and can also help in systematic decision-making.

More specifically, system and method are provided for identifying optimal equipment for pelletization for obtaining desired product size distribution and that also satisfies other equipment criteria required for the process. The system does so by using a ranking algorithm and further involves optimization to identify the best range of operating conditions in a pelletization equipment to achieve desired product size distribution for a given feed size distribution. This is done by developing mechanistic model for each equipment. The mechanistic model is used for predicting product size distribution at different operating conditions for a given feed size distribution. The operating parameters are varied with the help of optimization algorithm to identify operating conditions that yield desired product. This is performed for each equipment by each equipment simulator. The operating space identified through these steps of simulation is used by the ranking algorithm to compare the suitability of equipment. The ranking algorithm also takes into account the equipment performance in other criteria such as cost of equipment, ease of cleaning, GMP compliance etc., and uses it to calculate score of each equipment. The equipment with highest score is considered the most suitable equipment for obtaining desired product size distribution given the feed properties.

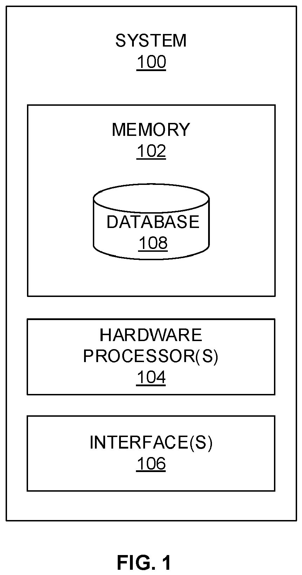

Referring now to the drawings, and more particularly to FIGS. 1 through 10B, where similar reference characters denote corresponding features consistently throughout the figures, there are shown preferred embodiments and these embodiments are described in the context of the following exemplary system and/or method.

FIG. 1 depicts an exemplary system 100 for identifying equipment for pelletization, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to various feeds, associated feed size distributions, product specification associated with the feeds, operating spaces generated by each equipment simulator wherein the simulators are comprised in the memory 102 and invoked for execution of method described herein. The database 108 further comprises ranked list of equipment(s) and their operating conditions, and the like. The database 108 further comprises one or more parameters associated with particle comprised in the feeds. The memory 102 comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

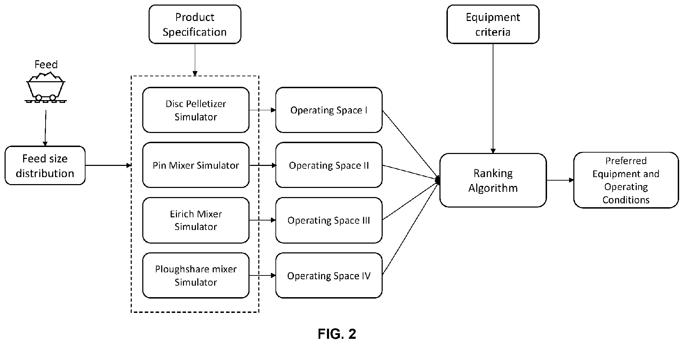

FIG. 2, with reference to FIG. 1, depicts an exemplary high level block diagram of the system 100 for identifying equipment for pelletization, in accordance with an embodiment of the present disclosure.

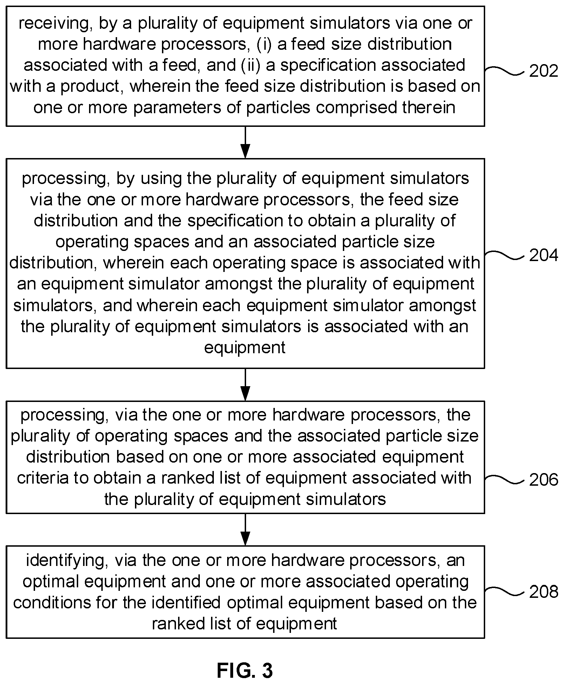

FIG. 3, with reference to FIGS. 1 through 2, depicts an exemplary flow chart illustrating a method for identifying equipment for pelletization, using the systems 100 of FIG. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 2, the flow diagram as depicted in FIG. 3, and FIGS. 4 through 10B.

At step 202 of the method of the present disclosure, the one or more hardware processors 104 receive, by using a plurality of equipment simulators, (i) a feed size distribution associated with a feed, and (ii) a specification associated with a product. The feed size distribution is based on one or more parameters of particles comprised therein, in one example embodiment of the present disclosure. In other words, the feed size distribution is based on the parameters such as particle diameter and weight fraction of the particle comprised in the feed. As depicted in FIG. 2, feed size distribution associated with a feed and the specification associated with a product (also referred as a product specification and interchangeably used herein) serve as an input to each of the plurality of equipment simulators.

The particle size distribution of feed as well as granulated product is analyzed either by sieve analysis or by a laser diffraction-based particle size analyzer such as Malvern Mastersizer as known in the art. In sieve analysis, a specific amount of powder is introduced on the top sieve of a sieve stack. The sieve stack is subjected to vibration through an electric motor for 'x' minutes (e.g., say about 20 minutes). After this operation, each sieve is taken out and the amount of powder retained on each sieve is noted down. Example of data obtained from sieve size analysis of feed is given below in Table 1.

Table 1

| Particle Size Distribution before granulation | | | | | |
|---|---|---|---|---|---|
| Mesh no. | Mesh Opening ($\mu$m) | Weight retained (gms) | Average Particle Diameter, $d_p$ ($\mu$m) | Weight fraction ($w_p$) | Cumulative fraction (<$Dpi$) |
| 36 | 420 | 0 | | | 1 |
| 52 | 300 | 0.5 | 360 | 0.000890472 | 0.99910952 8 |
| 60 | 250 | 9 | 275 | 0.016028495 | 0.98308103 3 |
| 100 | 150 | 51 | 200 | 0.090828139 | 0.89225289 4 |

(continued)

| Particle Size Distribution before granulation | | | | | |
|---|---|---|---|---|---|
| Mesh no. | Mesh Opening ($\mu$m) | Weight retained (gms) | Average Particle Diameter, $d_p$ ($\mu$m) | Weight fraction ($w_p$) | Cumulative fraction (*<Dpi*) |
| 150 | 105 | 51 | 127.5 | 0.090828139 | 0.80142475 5 |
| 200 | 75 | 37 | 90 | 0.065894924 | 0.73552983 1 |
| 300 | 53 | 129 | 64 | 0.229741763 | 0.50578806 8 |
| 400 | 37 | 197 | 45 | 0.350845948 | 0.15494211 9 |
| pan | | 87 | 18.5 | 0.154942119 | 0 |
| | Total weight (grams) | 561.5 | | 1 | |

The first column in Table 1 represents mesh no. of the sieves. The second column specifies the opening diameter of the corresponding mesh in microns. The third column is the weight of particles retained on the corresponding mesh. The fourth column is the average particle diameter ($d_p$) in microns that is calculated by taking average of opening diameter of corresponding mesh and the mesh stacked above it. The fifth column is weight fraction ($w_p$) calculated using data in third column. The sixth column is cumulative weight fraction calculated from fifth column. The particle size distribution (PSD) of feed is graphically represented in two ways:

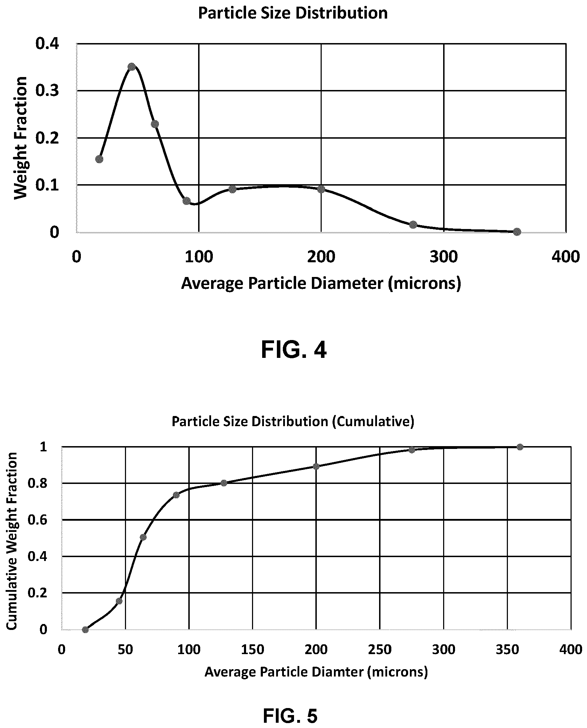

1. Based on actual weight fraction retained on sieve and the corresponding average particle diameter (refer FIG. 4)
2. Based on cumulative weight fraction with respect to average particle diameter (refer FIG. 5)

More specifically, FIG. 4, with reference to FIGS. 1 through 3, depicts a graphical representation illustrating particle size distribution (also referred as feed size distribution or size distribution associated with the feed and/or particle size distribution associated with the product), in accordance with an embodiment of the present disclosure. FIG. 5, with reference to FIGS. 1 through 4, depicts a graphical representation illustrating cumulative particle size distribution (also referred as cumulative feed size distribution or cumulative size distribution associated with the feed and/or cumulative particle size distribution associated with the product), in accordance with an embodiment of the present disclosure.

The production specification refers to a specification of the product in terms of size and distribution. Size is measured by calculating the mean particle size of the distribution and represented as $x_d$. Distribution refers to particle distribution which is measured with respect to standard deviation of the particle size distribution ($\eta_d$). Shape herein is specified aspect ratio tolerance. Example of product specification may include information pertaining to mean particle diameter ($x_d$) ranging from $p$ $\mu$m to $q$ $\mu$m wherein $p$ = 100 and $q$ = 300 $\mu$m with a deviation of $y$% ($\varepsilon$) (e.g., $y$=20) and the distribution should be narrow with standard deviation ($\eta_d$) not more than $z$% (e.g., $z$ =30).

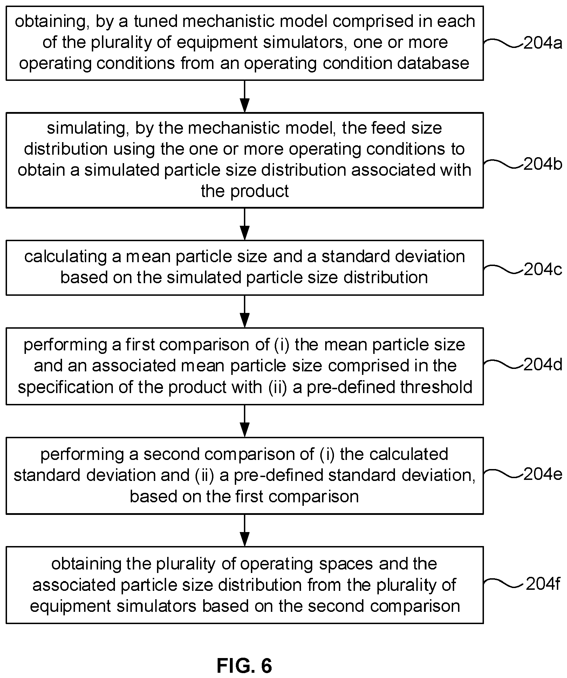

At step 204 of the method of the present disclosure, the one or more hardware processors 104 process, by using the plurality of equipment simulators via the one or more hardware processors, the feed size distribution and the specification to obtain a plurality of operating spaces and an associated particle size distribution. For instance, say equipment simulator A produces an operating space I as an output. Similarly, equipment simulator B produces an operating space II, and so on. Each operating space is associated with an equipment simulator amongst the plurality of equipment simulators. In the present disclosure, the expression 'operating space' refers to a combination of two or more operating conditions of the equipment (e.g., batch loading, binder type, binder loading, binder concentration, mixing/operating time and/or other conditions mentioned in Table 2 for each equipment). Such combination of operating conditions serving as operating space for specific equipment shall not be construed as limiting the scope of the present disclosure. In the present disclosure, system and method have considered 4 equipment in total for better understanding of the embodiments described herein. Each of the 4 equipment are associated with a simulator as depicted in FIG. 2. For instance, the equipment simulator A comprises a tuned mechanistic model and is further associated with a specific equipment (e.g., say Disc Pelletizer). Similarly, the equipment simulator B comprises a tuned mechanistic model and is further associated with another equipment (e.g., say Pin Mixer). Similarly, the equipment simulator C comprises a tuned mechanistic model and is further associated with another equipment (e.g., say Eirich Mixer) and the equipment simulator D comprises a tuned mechanistic model and is further associated with another equipment (e.g., say Ploughshare mixer). It is to be understood by a person having ordinary skill in the art or person skilled in the art that such examples and use of simulators and equipment as described herein for better understanding of the embodiments shall not be construed as limiting the scope of the present disclosure. In other words, there can be any number of simulators and equipment for pelletization. In an embodiment of the present disclosure, processing of the feed size distribution and the product specification to obtain the plurality of operating spaces involves one or more sub-steps. For instance, at first, at step 204a, the one or more hardware processors 104 fetch one or more operating conditions from an operating condition database (e.g., also referred as operating parameter database and interchangeably used herein) and simultaneously receive the feed size distribution as input. More specifically, the tuned mechanistic model comprised in each of the equipment simulator obtain the one or more operating conditions from an operating condition database. The one or more operating conditions may comprise, but are not limited to, batch loading, binder type, binder loading, binder concentration, mixing/Operating time, and the like. Further, at step 204b, the one or more hardware processors 104 invoke the tuned mechanistic model wherein the tuned mechanistic model simulates the feed size distribution using the one or more operating conditions and obtain a simulated particle size distribution associated with the product as output. At step 204c, each equipment simulator (or the tuned mechanistic model comprised in each equipment simulator) calculates a mean particle size '$x$' and a standard deviation '$\eta$' based on the simulated particle size distribution. At step 204d, each equipment simulator (or the tuned mechanistic model comprised in each equipment simulator) performs a first comparison of (i) the mean particle size '$x$' and an associated mean particle size '$x_d$' with (ii) a pre-defined threshold '$\varepsilon$'. The associated mean particle size '$x_d$' and the pre-defined threshold '$\varepsilon$' are comprised in the specification of the product obtained as an input at step 202. More specifically, at step 204d, the one or more hardware processors 104 take a difference between the mean particle size '$x$' and the associated mean particle size '$x_d$' and compare with the pre-defined threshold '$\varepsilon$'. Specifically, the system 100 (or each equipment simulator (or the tuned mechanistic model comprised in each equipment simulator) checks whether the difference between the mean particle size '$x$' and the associated mean particle size '$x_d$' is less than or equal to the pre-defined threshold. In other words, the system 100 (or each equipment simulator (or the tuned mechanistic model comprised in each equipment simulator) checks whether '$(x - x_d) \leq \varepsilon$. If $(x - x_d) > \varepsilon$, then another set of operating conditions is fetched from the operating condition database and the step 204a is repeated. If '$(x - x_d) \leq \varepsilon$, then at step 204e, each equipment simulator (or the tuned mechanistic model comprised in each equipment simulator) perform a second comparison of (i) the calculated standard deviation '$\sigma$' and (ii) a pre-defined standard deviation '$\sigma_d$', based on the first comparison. More specifically, at step 204e, the one or more hardware processors 104 check whether the standard deviation '$\sigma$' is less than or equal to the pre-defined standard deviation '$\sigma_d$'. In other words, the system 100 (or each equipment simulator (or the tuned mechanistic model comprised in each equipment simulator) checks whether $\sigma \leq \sigma_d$. If $\sigma \leq \sigma_d$, then at step 204f, the plurality of operating spaces is obtained as outputs from the plurality of equipment simulators based on the second comparison. Else, $\sigma > \sigma_d$, then another set of operating conditions is fetched from the operating condition database and the step 204a is repeated as mentioned above. The sub-step of processing of the feed size distribution and the product specification to obtain the plurality of operating spaces are depicted in FIG. 6. More specifically, FIG. 6, with reference to FIGS. 1 through 5, depicts a flow-chart illustrating a method of simulating the feed size distribution and the specification of the product using each equipment simulator comprised in the systems 100 of FIGS. 1-2 to obtain the plurality of operating spaces, in accordance with an embodiment of the present disclosure.

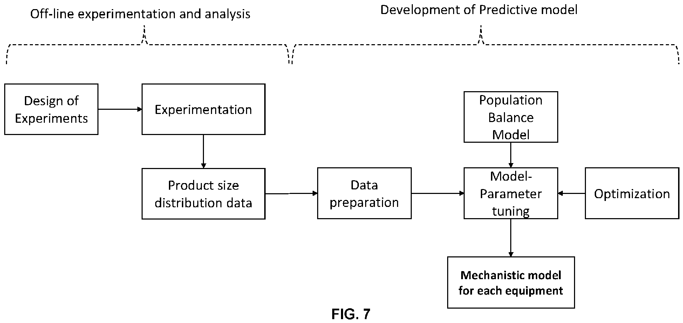

The tuned mechanistic model is obtained by performing a plurality of steps. The process for obtaining the tuned mechanistic model is depicted in FIG. 7. More specifically, FIG. 7, with reference to FIGS. 1 through 6, depicts a block diagram illustrating a process of generating a tuned mechanistic model using the systems 100 of FIGS. 1-2, in accordance with an embodiment of the present disclosure. The experimental procedure for each equipment and result of granulation/pelletization when different parameters are varied in each equipment as described above. The system and method now demonstrate how a mechanistic model is developed to predict the product size distribution in each equipment. The tuned mechanistic model helps in determining the particle size distribution of product for given set of parameters without carrying out experiments. As depicted in FIG. 7, the steps for obtaining/developing/generating the tuned mechanistic model can be divided in two categories: (a) Off-line experimentation and Analysis and (b) development of predictive model/mechanistic model. At first, the step involves designing the experiments, conducting experiments, and obtaining product/feed size distribution through sieve analysis. The second step involves using state-of-the-art population balance equation for modeling granulation process. The developed population balance model (PBM) (also referred as mechanistic model) is then tuned using experimental data. Once the PBM model is tuned the resultant output is the tuned mechanistic model which predicts the product/feed size distribution for a give set of parameters.

The product properties depend on different operating conditions. Examples of operating conditions, irrespective of equipment type, that affect the product size distribution, may include, but are not limited to batch loading, binder type, binder loading, binder concentration, mixing/operating time, and the like. Table 2 enlists additional set of operating conditions for each equipment.

Table 2

| Equipment | Additional parameters specific to equipment |
|---|---|
| Disc Pelletizer | 1. Disc Inclination<br>2. Disc Speed |
| Pin Mixer | 1. Shaft Speed |
| Eirich Mixer | 1. Pan Speed<br>2. Rotor Speed |
| Ploughshare Mixer | 1. Impeller Speed<br>2. Rotor speed |

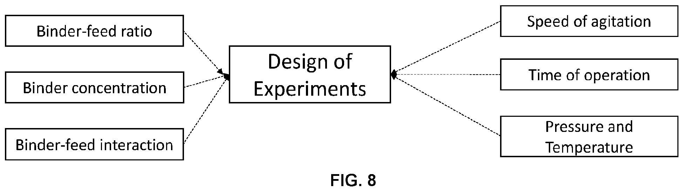

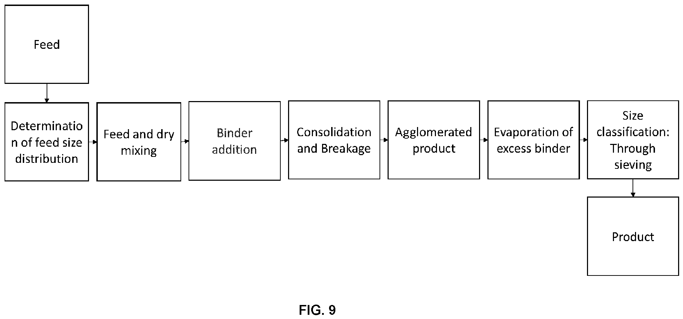

A (limited) set of experiments was carried out for each equipment to study the effect of each of the operating conditions on the product size distribution. This set of experiments can be determined using standard Design of Experiment (DoE) techniques such as full-factorial, Taghuchi method, etc. as known in the art. FIG. 8, with reference to FIGS. 1 through 7, shows standard operating conditions to be considered for designing granulation experiments, in accordance with an embodiment of the present disclosure. A general procedure for any granulation experiment is depicted in FIG. 9. More specifically, FIG. 9, with reference to FIGS. 1 through 8, depicts experimental procedure for granulation experiment, in accordance with an embodiment of the present disclosure.

As mentioned above, product/feed size distribution can be determined by sieving the entire product on a sieve shaker or by collecting sample of product (if the quantity of agglomerated product is large) and analyzing them in Malvern Mastersizer. This data is then pre-processed which involves converting the data obtained from sieving or particle size analyzer to standard format required for parameter tuning (e.g., in Python software).

In the present disclosure, granulation process was modelled with population balance equation. The population balance equation is an extension mass and energy balances that can be applied to physical property of discrete objects. In this case, the system and method have accounted for mass balance of granulated particles with particle size as the property of interest. The population balance equation for granulation process has been described in equation (1) below.

$$\frac{\partial n(x,t)}{\partial t} = \frac{1}{2}\int_0^x \beta(x-\epsilon,\epsilon,t)n(x-\epsilon,t)n(\epsilon,t)\,d\epsilon \; - \int_0^\infty \beta(x,\epsilon,t)n(\epsilon,t)\,d\epsilon +$$

$$\int_x^\infty b(x,\epsilon)S(\epsilon)n(\epsilon,t)\,d\epsilon - S(x)n(x,t)$$

$$(1)$$

$n(x, t)$ is the number density function dependent size of particles *(x)* and time*(t)*. The first term on right hand side represents birth of particles in the $n(x, t)$ size class due to aggregation, the second term represents loss of particles in $n(x, t)$ due to aggregation, the third term represents the birth of particles in $n(x, t)$ due to breakage of large particles *(> x)* and the fourth term represents loss of particles due to breakage in *x* size class. $\beta$ is the aggregation rate, *b* is the daughter/child distribution function, *S* is the breakage rate (or selectivity). The PBM (or mechanistic model) equations were solved using cell average technique as described by prior research work (e.g., refer Kumar et al (2008)).

The phenomena of growth and breakage were mathematically modelled using the equations described below in equation (2):

$$\frac{dN_i}{dt} = B_{growth,i}^{CA} + B_{break,i}^{CA} - D_{growth,i}^{CA} - D_{break,i}^{CA} \quad (2)$$

Where $N_i$ is the number of particles in size class i, *B, D* represent the birth and death rates and their suffixes indicate whether breakage or growth is being modeled. The superscript *CA* indicates that cell averaging technique is being used to calculate the terms. Cell average technique ensures that the first two moments are conserved while solving the PBM equations. Individual kernels for aggregation and breakage are described in the subsequent sections. Further details on solving population balance equation through cell average technique can be found in literature (Kumar et al. 2008). All codes were developed and implemented using Python 3, in an embodiment of the present disclosure.

The system and method now describe aggregation kernel used for modeling granulation in Ploughshare mixer. It was observed from experimental analysis that the product size distribution is bimodal in nature when Ploughshare mixer was used. For development of PBM model that can capture bimodal distribution traditional aggregation kernels like $\beta = x. \; \epsilon$ or $\beta = x + \epsilon$ are not sufficient. Therefore, aggregation kernel proposed by Jimenez et al (2021) was implemented which is described in equation (3):

$$(x, \varepsilon) = \begin{cases} \beta_0 (x\varepsilon)^\eta & x < R_C & \varepsilon < R_C \\ \beta_0 A \cdot (x\varepsilon)^\eta & x > R_C & \varepsilon > R_C \end{cases} \qquad (3)$$

Here, $R_C$ is the critical particle size: particle combinations larger than this size will aggregate faster, A represents the accelerating factor that account for increase in aggregation rate for particle combinations exceeding $R_C$, $\beta_0$ represents the aggregation factor that indirectly accounts for aggregation efficiency and $\eta$ represents the aggregation index. The value of $\eta$ was fixed to 0.33 for the current model.

The system and method now describe breakage kernel that is used for modeling granulation in ploughshare mixer. A binary breakage model was implemented to account for particle size reduction due to shearing action of chopper as well as impeller and is expressed with below equations (4) and (5):

$$b(x, \varepsilon) = \frac{2b_0}{x} \qquad (4)$$

$$S(x) = S_0 x^{1/3} \qquad (5)$$

$b_0$ is the Breakage factor and $S_0$ is the selectivity factor. For developing PBM, the system and method of the present disclosure have mainly accounted for critical parameters such as L/S ratio and binder concentration. The profile of impeller speed and chopper speed is same for cases that are used for tuning the PBM.

The procedure of parameter tuning of the mechanistic model (or PBM) involves sensitivity analysis and then carrying out full-factorial simulation for the range determined by sensitivity analysis. The results of full-factorial simulations were then compared with each experimental result and mean square error was calculated (not shown in FIGS.). The set of parameters for which the mean square error (MSE) was lowest was considered for next round of tuning. A refined set of combinations of parameters were considered for simulation are closely located near the parameter set found in previous step. The results from new simulation were compared with experimental dataset and the combination with least MSE was considered as the optimized set of parameters. Further, an optimization technique such as particle swarm optimization, non-dominated genetic algorithm (NSGA-II) can be implemented for parameter tuning when the number of parameters to be tuned is high.

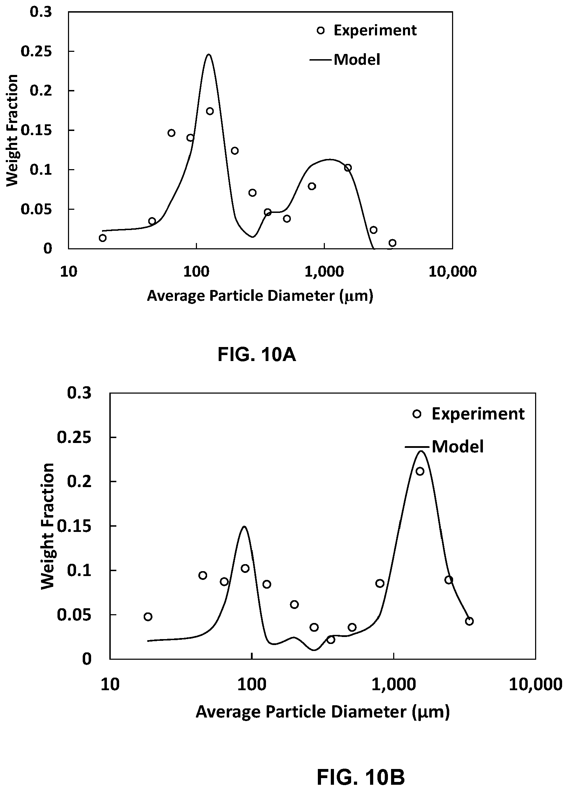

A population balance model/tuned mechanistic model was developed/generated by the system and method of the present disclosure as depicted in FIG. 7, and the parameter were tuned for aggregation kernel. FIGS. 10A-10B, with reference to FIGS. 1 through 9, show a comparison of predicted product size distribution with experimentally obtained product size distribution, in accordance with an embodiment of the present disclosure. More specifically, FIGS. 10A-10B depict comparison of model results with experimental data when (a) binder is pure water and binder to feed ratio is 5%, and (b) binder is polyvinyl alcohol (PVA), binder concentration is 2% (w/w) and binder to feed ratio is 10%, respectively. The mean square error (MSE) between model result and experimental data for FIG. 10A is 0.00186, the same for FIG. 10B is 0.00123.

From FIGS. 10A and 10B, it is clear that the population balance equation based tuned mechanistic model can predict the particle size distribution of product with fair accuracy. Hence, the tuned mechanistic model can be further used for identifying operating conditions for desired product size specifications.

Referring to steps of FIG. 3, once the plurality of operating spaces is obtained, at step 206 of the method of the present disclosure, the one or more hardware processors 104 process the plurality of operating spaces and the associated particle size distribution based on an associated equipment criteria to obtain a ranked list of equipment associated with the plurality of equipment simulators. In other words, the one or more hardware processors 104 execute a ranking algorithm (e.g., a ranking technique as known in the art) that receives the plurality of operating spaces (e.g., operating spaces I, II, III, IV, and so on) along with equipment specification as depicted in FIG. 2 and produces the ranked list of equipment associated with the plurality of equipment simulators. Each equipment from the plurality of equipment is ranked in order along with their operating conditions. Each equipment from the ranked list of equipment is associated with an equipment score (or some weightage).

The equipment score (or equipment weightage) is based on the one or more associated equipment criteria comprising at least one of a pellet size, a pellet size distribution, a pellet shape, and a compliance status of each equipment with a compliance entity, performance of each equipment with one or more Application Programming Interface (APIs), an equipment capacity, an equipment cost, feasibility of coating associated with pellets to be produced by each equipment, a temperature control, mechanical integrity of pellets, mechanical stability of equipment, maintenance and service, delivery time, an equipment manufacturer, a level of cleaning each equipment, a level of operating each equipment, a choice of a binder for the pellets to be produced, an amount of binder required for pelletization, and an atomization or a binder introduction mechanism. It is to be understood by a person having ordinary skill in the art or person skilled in the art that the above-mentioned criteria shall not be construed as limiting the scope of the present disclosure. In other words, the one or more criteria may vary and differ from the requirements and environment in which the system and method described herein by the present disclosure are implemented. The above step of obtaining the ranked list of equipment is better understood by way of following description:

Each equipment from the plurality of equipment is compared quantitatively using analytical technique(s) known in the art (e.g., refer Analytical Hierarchy Process (AHP) (Saaty, 1987, Donegan et al, 1991)). In the present disclosure, the system and method accounted for 15 criteria were identified on the basis of which, the equipment are compared, in an example embodiment. The criteria were also ranked based on their individual significance. Weights were assigned to each of the criteria based on its rank and significance. For instance, criterion ranked one has higher weight than criterion ranked two and so on. Some of the criteria and their rankings are shown in the Table 3 below.

Table 3

| Rank | Criteria |
| --- | --- |
| 1 | Pellet Size<br>Pellet Size distribution<br>Pellet shape<br>GMP Compliance |
| 2 | Equipment Performance with API |
| 3 | Capacity/ Volume |
| 4 | Cost |
| 5 | Feasibility of Coating |
| 6 | Temperature Control |
| 7 | Scalability |
| 8 | Maintenance and Service |
| 9 | Delivery Time |
| 10 | Reputation of Manufacturer |
| 11 | Ease of cleaning |
| 12 | Ease of operation |

The pellet size, size distribution, Pellet shape, and GMP compliance of the machine were ranked 1, as they are the most important parameters, in an example embodiment of the present disclosure. Pairwise comparison of equipment was also performed, with reference to each criterion separately. When an equipment is being compared to another, a score is assigned to it as shown in Table 4.

Table 4

| Description | Score |
| --- | --- |
| A is Equally Important | 1 |
| A is slightly more imp | 3 |
| A is moderately more important | 5 |
| A is much more important | 7 |
| A is strongly more important | 9 |

This comparison matrix is then checked for consistency using the Eigen value and Saaty's random index. If the consistency index of the comparison matrix is determined to be less than a pre-defined threshold value (e.g., say 0.1), then the ranking is said to be consistent. From a consistent comparison matrix, the score of each equipment was determined with reference to each criterion. Similarly, each criterion has been compared pairwise against every other criterion. The comparison matrix of the criteria was also made and after checking for consistency, the weights of each criteria was determined from the matrix. The scoring chart and a sample comparison matrix is shown in the Table 5 below.

Table 5

| Equipment A↓ | Pellet Size | | | |
|---|---|---|---|---|
| | *Eirich Mixer Granulator* | *Loedige Plough Share Mixer* | *Pin Mixer* | *Disc Pelletiser* |
| *Eirich Mixer Granulator* | 1 | 3 | 0.25 | 7 |
| *Plough Share Mixer* | 0.333 | 1 | 0.142 | 5 |
| *Pin Mixer* | 4 | 7 | 1 | 9 |
| *Disc Pelletiser* | 0.142 | 0.2 | 0.111 | 1 |

Below description illustrates computation of equipment score and weightage of criteria: From the comparison matrix (Matrix-C, shown in above Table 5), the equipment score is computed in the following way:

1. Each element in the comparison matrix is divided by the sum of all elements in the column to obtain the normalized C matrix

$$C_{norm} = \frac{C_{i,j}}{\sum_i C_{i,j}}$$

For the C, matrix shown in Table 4, the $C_{norm}$ matrix computed is shown in Table 6
1. The score of equipment is the average of the values in the same row

$$W_i = \frac{\sum_{j=1}^{no\ of\ equipment} W_{i,j}}{no.\ of\ equipment}$$

The column titled ranking score in Table 6 contains the scores computed for each equipment. The weight of each equipment is also computed in the same manner, except that the comparison matrix contains pairwise comparison of each criterion (this would be 15x15 matrix because there are 15 criteria to be compared).
2. The consistency of the comparison matrix needs to be checked before accepting the scores computed in step 2 as the final equipment score against a particular criterion. This is done in the following way. The C-matrix and W matrix are multiplied to obtain the $W_S$ matrix.

$$W_S = [C][W]$$

Table 6: Equipment score calculation- Sample calculation

| Equipment A↓ | Pellet Size | | | | |
|---|---|---|---|---|---|
| | *Eirich Mixer Granulator* | *Loedige Plough Share Mixer* | *Pin Mixer* | *Disc Pelletizer* | *Ranking Score* |
| *Eirich Mixer Granulator* | 0.182608696 | 0.267857143 | 0.166227 | 0.31818182 | 0.233719 |
| *Loedige Plough Share Mixer* | 0.060869565 | 0.089285714 | 0.094987 | 0.22727273 | 0.118104 |
| *Pin Mixer* | 0.730434783 | 0.625 | 0.664908 | 0.40909091 | 0.607358 |
| *Disc Pelletizer* | 0.026086957 | 0.017857143 | 0.073879 | 0.04545455 | 0.040819 |
| *Total* | 1 | 1 | 1 | 1 | 1 |

3. The consistency vector is then computed by multiplying each element of the $W_S$ matrix with the arithmetic inverse of the corresponding element in the $W$ matrix. The consistency vector for this case is shown in Table 7

Table 7

| | |
|---|---|
| Eirich Mixer Granulator | 4.388201788 |
| Loedige Plough Share Mixer | 4.122410819 |
| Pin Mixer | 4.505301949 |
| Disc Pelletiser | 4.049864212 |

4. Eigen value, $\lambda$ is the average of all the elements of the consistency matrix

$$\lambda = \frac{\sum Elements\ of\ consistency\ matrix}{no\ of\ equipment}$$

For the example shown, $\lambda = 4.266$

5. The consistency index ($CI$) is then calculated

$$CI = \frac{\lambda - n}{n - 1},$$

*n is the dimension of the C matrix* Here, $CI = \frac{4.266 - 4}{4 - 1} = 0.088$

6. Now, the Consistency ratio *(CR)* is computed by dividing the consistency index obtained in step 6 with Saaty's Random index (e.g., refer Donegan et al, 1991) for the same *n*. Random index is the average consistency ratio computed for randomly generated comparison matrices.

$$CR = \frac{CI}{RI_n}$$

Random indices for different *n* values can be obtained from research works known in the art. For *n* =4, =4, *RI* = 0.9 Hence,

$$CR = \frac{0.088}{0.9} = 0.098$$

7. The consistency ratio here is less than 0.1, hence the equipment score calculated in step 2 is accepted as the equipment score for the particular criteria under consideration. If the *CR* value is greater, then the comparison matrix is constructed again, and the steps are repeated until *CR* < 0.1 is obtained.

The final weights of each criterion and the scores of each equipment against each criterion is shown in below Table 8. To assign a total score to each equipment, the following formula was used.

$$Total\ Score\ of\ equipment = \frac{\sum_{i=1}^{no.\ of\ criteria} weight_i \times Equipment\ score_i}{\sum_{i=1}^{no.\ of\ criteria} weight_i}$$

Table 8

| Sr. No. | Evaluation Parameter | Weight for paramet er | Rank Score | | | |
|---|---|---|---|---|---|---|
| | | | Eirich Mixer Granulat or | Loedige Plough Share Mixer | Pin Mixer | Disc Pelletizer |
| 1 | Pellet Size | 0.121 | 0.234 | 0.118 | 0.607 | 0.041 |
| 2 | Pellet Size Distribution | 0.121 | 0.284 | 0.093 | 0.585 | 0.037 |
| 3 | Pellet Shape | 0.121 | 0.299 | 0.105 | 0.558 | 0.038 |
| 4 | Cost of equipment | 0.085 | 0.043 | 0.120 | 0.184 | 0.653 |
| 5 | GMP Compliance | 0.121 | 0.306 | 0.546 | 0.110 | 0.038 |
| 6 | Capacity | 0.094 | 0.300 | 0.300 | 0.100 | 0.300 |
| 7 | Ease of cleaning | 0.011 | 0.226 | 0.122 | 0.041 | 0.612 |
| 8 | Possibility of coating | 0.054 | 0.378 | 0.431 | 0.073 | 0.119 |
| 9 | Maintenance and service | 0.027 | 0.054 | 0.543 | 0.112 | 0.291 |
| 10 | Reputation of manufacturer | 0.015 | 0.438 | 0.438 | 0.082 | 0.041 |
| 11 | Ease of operation | 0.009 | 0.291 | 0.574 | 0.090 | 0.044 |
| 12 | Delivery time | 0.021 | 0.089 | 0.044 | 0.270 | 0.597 |
| 13 | Temperature Control | 0.047 | 0.558 | 0.263 | 0.057 | 0.122 |
| 14 | Scalability | 0.033 | 0.558 | 0.263 | 0.122 | 0.057 |
| 15 | Equipment Performance with API | 0.120 | 0.390 | 0.390 | 0.036 | 0.184 |
| **Total weight:** | | **1.000** | | | | |
| **Total score of equipment $\sum$(Rankscore$\times$Weight) /$\sum$Weight** | | | **0.294** | **0.262** | **0.277** | **0.167** |

The system and method comparing the equipment based on the fifteen evaluation criteria considered, and their relative importance, Eirich mixer granulator attained the highest score of 0.295, followed by pin mixer with a score of 0.277 (not shown in FIGS.).

Upon obtaining the ranked list of equipment, at step 208 of the method of the present disclosure, the one or more hardware processors 104 identify an optimal equipment (also referred as suitable equipment and interchangeably used herein) and one or more associated operating conditions for the identified optimal equipment (e.g., also referred as identified suitable equipment and interchangeably used herein) based on the ranked list of equipment. An equipment having optimal operating conditions may be identified as suitable equipment/optimal equipment based on the above-mentioned one or more criteria by the system 100. The identified suitable equipment/optimal equipment is used by the system 100 for pelletization of the feed to produce a desired product/pellet. In the experiments performed by the system and method of the present disclosure, Eirich mixer granulator was able to achieve relatively good yield of pellets in the size range of interest with reasonably good sphericity. It is also possible to procure a GMP-Pharma compliant Eirich mixer granulator. These favorable factors contributed chiefly to the high score of the equipment, along with the reputation and experience of the manufacturer.

Embodiments of the present disclosure provide systems and methods for identifying suitable equipment for pelletization for obtaining desired product size distribution and that also satisfies other equipment criteria required for the process. The system does so by using a ranking algorithm (wherein the system 100 uses as known in the art ranking algorithm which is stored in the memory 102 and invoked for execution of the method(s) described herein). Further, the method of the present disclosure performs optimization to identify the best range of operating conditions for equipment to achieve pelletization of desired product size distribution for a given feed size distribution. This is done by developing and tuning a mechanistic model for each equipment. The tuned mechanistic model is used for simulating the feed size distribution at different operating conditions. The operating conditions are varied with the help of optimization technique (e.g., the optimization technique as known in the art and is stored in the memory 102 and invoked for execution of the method described herein) to identify optimal operating conditions that yield desired product. This is performed for each equipment. The operating space identified through this method is used by the ranking algorithm to compare the suitability of equipment. The ranking algorithm also accounts for the equipment performance in other criteria such as cost of equipment, ease of cleaning, compliance status with equipment standards/entities, etc., and use it to calculate score of each equipment. The equipment with highest score is considered the most suitable equipment for obtaining desired product size distribution given the feed properties.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:

   receiving, by a plurality of equipment simulators via one or more hardware processors, i) a feed size distribution associated with a feed, and ii) a product specification (202), wherein the feed size distribution is based on one or more parameters of particles comprised therein;

processing, by using the plurality of equipment simulators via the one or more hardware processors, the feed size distribution and the product specification to obtain a plurality of operating spaces and a particle size distribution (204), wherein operating spaces refers to a combination of two or more operating conditions of the equipment, wherein each operating space amongst the plurality of operating spaces is associated with an equipment simulator amongst the plurality of equipment simulators, and wherein each equipment simulator amongst the plurality of equipment simulators is associated with an equipment;

processing, via the one or more hardware processors, the plurality of operating spaces and the particle size distribution based on one or more equipment criteria to obtain a ranked list of equipment associated with the plurality of equipment simulators (206), wherein the equipment criteria comprising at least one of a pellet size, a pellet size distribution, a pellet shape, and a compliance status of each equipment with a compliance entity, performance of each equipment with one or more Application Programming Interface, APIs, an equipment capacity, an equipment cost, feasibility of coating associated with pellets to be produced by each equipment, a temperature control, mechanical integrity of pellets, mechanical stability of equipment, maintenance and service, delivery time, an equipment manufacturer, a level of cleaning each equipment, a level of operating each equipment, a choice of a binder for the pellets to be produced, an amount of binder required for pelletization, and an atomization or a binder introduction mechanism; and

identifying, via the one or more hardware processors, an optimal equipment and one or more associated operating conditions for the identified optimal equipment based on the ranked list of equipment (208).

2. The processor implemented method as claimed in claim 1, wherein the one or more parameters comprise a diameter and a weight fraction of the particle.

3. The processor implemented method as claimed in claim 1, wherein the step of processing the feed size distribution and the product specification to obtain the plurality of operating spaces comprises:

obtaining, by a tuned mechanistic model comprised in each of the plurality of equipment simulators, one or more operating conditions from an operating condition database (204a);

simulating, by the tuned mechanistic model, the feed size distribution using the one or more operating conditions to obtain a simulated particle size distribution associated with the product (204b);

calculating a mean particle size and a standard deviation based on the simulated particle size distribution (204c);

performing a first comparison of the mean particle size and an associated mean particle size comprised in the product specification with a pre-defined threshold (204d);

performing a second comparison of the calculated standard deviation and a pre-defined standard deviation (204e); and

obtaining the plurality of operating spaces and the associated particle size distribution from the plurality of equipment simulators based on the second comparison (204f).

4. The processor implemented method as claimed in claim 1, wherein each equipment from the ranked list of equipment is associated with an equipment score.

5. The processor implemented method as claimed in claim 4, wherein the equipment score is based on the one or more associated equipment criteria.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive, by a plurality of equipment simulators, i) a feed size distribution associated with a feed, and ii) a product specification, wherein the feed size distribution is based on one or more parameters of particles comprised therein;

process, by using the plurality of equipment simulators, the feed size distribution and the product specification to obtain a plurality of operating spaces and particle size distribution, wherein operating spaces refers to a combination of two or more operating conditions of the equipment, wherein each operating space amongst the plurality of operating spaces is associated with an equipment simulator amongst the plurality of equipment simulators, and wherein each equipment simulator amongst the plurality of equipment simulators is associated with an equipment;

process the plurality of operating spaces and the particle size distribution based on an associated equipment criteria to obtain a ranked list of equipment with the plurality of equipment simulators, wherein the equipment criteria comprising at least one of a pellet size, a pellet size distribution, a pellet shape, and a compliance status of each equipment with a compliance entity, performance of each equipment with one or more Application Programming Interface, APIs, an equipment capacity, an equipment cost, feasibility of coating associated with pellets to be produced by each equipment, a temperature control, mechanical integrity of pellets, mechanical stability of equipment, maintenance and service, delivery time, an equipment manufacturer, a level of cleaning each equipment, a level of operating each equipment, a choice of a binder for the pellets to be produced, an amount of binder required for pelletization, and an atomization or a binder introduction mechanism; and

identify an optimal equipment and one or more associated operating conditions for the identified optimal equipment based on the ranked list of equipment.

7. The system as claimed in claim 6, wherein the one or more parameters comprise a diameter and a weight fraction of the particle.

8. The system as claimed in claim 6, wherein the plurality of operating spaces and the associated particle size distribution are obtained by:

obtaining, by a tuned mechanistic model comprised in each of the plurality of equipment simulators, one or more operating conditions from an operating condition database;

simulating, by the tuned mechanistic model, the feed size distribution using the one or more operating conditions to obtain a simulated particle size distribution associated with the product;

calculating a mean particle size and a standard deviation based on the simulated particle size distribution;

performing a first comparison of the mean particle size and an associated mean particle size comprised in the product specification with a pre-defined threshold;

performing a second comparison of the calculated standard deviation and a pre-defined standard deviation, based on the first comparison; and

obtaining the plurality of operating spaces and the associated particle size distribution from the plurality of equipment simulators based on the second comparison.

9. The system as claimed in claim 6, wherein each equipment from the ranked list of equipment is associated with an equipment score.

10. The system as claimed in claim 9, wherein the equipment score is based on the one or more associated equipment criteria.

11. One or more non-transitory machine-readable information storage mediums comprising one or more instructions which when executed by one or more hardware processors cause:

receiving, by a plurality of equipment simulators i) a feed size distribution associated with a feed, and ii) a product specification, wherein the feed size distribution is based on one or more parameters of particles comprised therein;

processing, by using the plurality of equipment simulators, the feed size distribution and the product specification to obtain a plurality of operating spaces and a particle size distribution, wherein operating spaces refers to a combination of two or more operating conditions of the equipment, wherein each operating space amongst the plurality of operating spaces is associated with an equipment simulator amongst the plurality of equipment simulators, and wherein each equipment simulator amongst the plurality of equipment simulators is associated with an equipment;

processing the plurality of operating spaces and the particle size distribution based on one or more equipment criteria to obtain a ranked list of equipment associated with the plurality of equipment simulators, wherein the equipment criteria comprising at least one of a pellet size, a pellet size distribution, a pellet shape, and a compliance status of each equipment with a compliance entity, performance of each equipment with one or more Application Programming Interface, APIs, an equipment capacity, an equipment cost, feasibility of coating associated with pellets to be produced by each equipment, a temperature control, mechanical integrity of pellets, mechanical stability of equipment, maintenance and service, delivery time, an equipment manufacturer, a level of cleaning each equipment, a level of operating each equipment, a choice of a binder for the pellets to be produced, an amount of binder required for pelletization, and an atomization or a binder introduction mechanism; and

identifying an optimal equipment and one or more associated operating conditions for the identified optimal equipment based on the ranked list of equipment.

12. The one or more non-transitory machine-readable information storage mediums as claimed in claim 11, wherein the one or more parameters comprise a diameter and a weight fraction of the particle.

13. The one or more non-transitory machine-readable information storage mediums as claimed in claim 11, wherein the step of processing the feed size distribution and the product specification to obtain the plurality of operating spaces comprises:

obtaining, by a tuned mechanistic model comprised in each of the plurality of equipment simulators, one or more operating conditions from an operating condition database;
simulating, by the tuned mechanistic model, the feed size distribution using the one or more operating conditions to obtain a simulated particle size distribution associated with the product;
calculating a mean particle size and a standard deviation based on the simulated particle size distribution;
performing a first comparison of the mean particle size and an associated mean particle size comprised in the product specification with a pre-defined threshold;
performing a second comparison of the calculated standard deviation and a pre-defined standard deviation; and
obtaining the plurality of operating spaces and the associated particle size distribution from the plurality of equipment simulators based on the second comparison.

14. The one or more non-transitory machine-readable information storage mediums as claimed in claim 11, wherein each equipment from the ranked list of equipment is associated with an equipment score.

15. The one or more non-transitory machine-readable information storage mediums of claim 14, wherein the equipment score is based on the one or more associated equipment criteria.

**Patentansprüche**

1. Prozessorimplementiertes Verfahren, umfassend:

Empfangen, durch eine Mehrzahl von Ausrüstungssimulatoren über einen oder mehrere Hardwareprozessoren, i) einer Futtergrößenverteilung, die mit einem Futter assoziiert ist, und ii) einer Produktspezifikation (202), wobei die Futtergrößenverteilung auf einem oder mehreren Parametern von darin enthaltenen Partikeln basiert;
Verarbeiten, unter Verwendung der Mehrzahl von Ausrüstungssimulatoren über den einen oder die mehreren Hardwareprozessoren, der Futtergrößenverteilung und der Produktspezifikation, um eine Mehrzahl von Betriebsräumen und eine Partikelgrößenverteilung (204) zu erhalten, wobei sich Betriebsräume auf eine Kombination von zwei oder mehr Betriebsbedingungen der Ausrüstung beziehen, wobei jeder Betriebsraum unter der Mehrzahl von Betriebsräumen mit einem Ausrüstungssimulator unter der Mehrzahl von Ausrüstungssimulatoren assoziiert ist, und wobei jeder Ausrüstungssimulator unter der Mehrzahl von Ausrüstungssimulatoren mit einer Ausrüstung assoziiert ist;
Verarbeiten, über den einen oder die mehreren Hardwareprozessoren, der Mehrzahl von Betriebsräumen und der Partikelgrößenverteilung basierend auf einem oder mehreren Ausrüstungskriterien, um eine Rangliste von Ausrüstungen zu erhalten, die mit der Mehrzahl von Ausrüstungssimulatoren (206) assoziiert sind, wobei die Ausrüstungskriterien mindestens eines von einer Pelletgröße, einer Pelletgrößenverteilung, einer Pelletform und einem Konformitätsstatus jeder Ausrüstung mit einer Konformitätsentität, Leistung jeder Ausrüstung mit einer oder mehreren Anwendungsprogrammierschnittstellen, APIs, einer Ausrüstungskapazität, Ausrüstungskosten, Machbarkeit einer Beschichtung, die mit Pellets assoziiert ist, die durch jede Ausrüstung hergestellt werden sollen, einer Temperatursteuerung, mechanischer Integrität von Pellets, mechanischer Stabilität von Ausrüstung, Instandhaltung und Wartung, Lieferzeit, einem Ausrüstungshersteller, einem Reinigungsgrad jeder Ausrüstung, einem Betriebsgrad jeder Ausrüstung, einer Auswahl eines Bindemittels für die zu produzierenden Pellets, einer Menge an Bindemittel, die zur Pelletisierung erforderlich ist, und einem Zerstäubungs- oder einem Bindemitteleinbringungsmechanismus umfassen; und

Identifizieren, über den einen oder die mehreren Hardwareprozessoren, einer optimalen Ausrüstung und einer oder mehrerer assoziierter Betriebsbedingungen für die identifizierte optimale Ausrüstung basierend auf der Rangliste von Ausrüstungen (208).

2. Prozessorimplementiertes Verfahren nach Anspruch 1, wobei der eine oder die mehreren Parameter einen Durchmesser und einen Gewichtsanteil des Partikels umfassen.

3. Prozessorimplementiertes Verfahren nach Anspruch 1, wobei der Schritt des Verarbeitens der Futtergrößenverteilung und der Produktspezifikation, um die Mehrzahl von Betriebsräumen zu erhalten, umfasst:

Erhalten, durch ein abgestimmtes mechanistisches Modell, das in jedem der Mehrzahl von Ausrüstungssimulatoren enthalten ist, einer oder mehrerer Betriebsbedingungen aus einer Betriebsbedingungsdatenbank (204a);
Simulieren, durch das abgestimmte mechanistische Modell, der Futtergrößenverteilung unter Verwendung der einen oder mehreren Betriebsbedingungen, um eine simulierte Partikelgrößenverteilung zu erhalten, die mit dem Produkt assoziiert ist (204b);
Berechnen einer mittleren Partikelgröße und einer Standardabweichung basierend auf der simulierten Partikelgrößenverteilung (204c);
Durchführen eines ersten Vergleichs der mittleren Partikelgröße und einer assoziierten mittleren Partikelgröße, die in der Produktspezifikation enthalten sind, mit einem vordefinierten Schwellenwert (204d);
Durchführen eines zweiten Vergleichs der berechneten Standardabweichung und einer vordefinierten Standardabweichung (204e); und
Erhalten der Mehrzahl von Betriebsräumen und der assoziierten Partikelgrößenverteilung von der Mehrzahl von Ausrüstungssimulatoren basierend auf dem zweiten Vergleich (204f).

4. Prozessorimplementiertes Verfahren nach Anspruch 1, wobei jede Ausrüstung aus der Rangliste von Ausrüstungen mit einer Ausrüstungsbewertung assoziiert ist.

5. Prozessorimplementiertes Verfahren nach Anspruch 4, wobei die Ausrüstungsbewertung auf dem einen oder den mehreren assoziierten Ausrüstungskriterien basiert.

6. System (100), umfassend:

einen Speicher (102), der Anweisungen speichert;
eine oder mehrere Kommunikationsschnittstellen (106); und
einen oder mehrere Hardwareprozessoren (104), die mit dem Speicher (102) über die eine oder die mehreren Kommunikationsschnittstellen (106) gekoppelt sind, wobei der eine oder die mehreren Hardwareprozessoren (104) durch die Anweisungen konfiguriert sind zum:

Empfangen, durch eine Mehrzahl von Ausrüstungssimulatoren, i) einer Futtergrößenverteilung, die mit einem Futter assoziiert ist, und ii) einer Produktspezifikation, wobei die Futtergrößenverteilung auf einem oder mehreren Parametern von darin enthaltenen Partikeln basiert;
Verarbeiten, unter Verwendung der Mehrzahl von Ausrüstungssimulatoren, der Futtergrößenverteilung und der Produktspezifikation, um eine Mehrzahl von Betriebsräumen und eine Partikelgrößenverteilung zu erhalten, wobei sich Betriebsräume auf eine Kombination von zwei oder mehr Betriebsbedingungen der Ausrüstung beziehen, wobei jeder Betriebsraum unter der Mehrzahl von Betriebsräumen mit einem Ausrüstungssimulator unter der Mehrzahl von Ausrüstungssimulatoren assoziiert ist, und wobei jeder Ausrüstungssimulator unter der Mehrzahl von Ausrüstungssimulatoren mit einer Ausrüstung assoziiert ist;
Verarbeiten der Mehrzahl von Betriebsräumen und der Partikelgrößenverteilung basierend auf assoziierten Ausrüstungskriterien, um eine Rangliste von Ausrüstungen mit der Mehrzahl von Ausrüstungssimulatoren zu erhalten, wobei die Ausrüstungskriterien mindestens eines von einer Pelletgröße, einer Pelletgrößenverteilung, einer Pelletform und einem Konformitätsstatus jeder Ausrüstung mit einer Konformitätsentität, Leistung jeder Ausrüstung mit einer oder mehreren Anwendungsprogrammierschnittstellen, APIs, einer Ausrüstungskapazität, Ausrüstungskosten, Machbarkeit einer Beschichtung, die mit Pellets assoziiert ist, die durch jede Ausrüstung hergestellt werden sollen, einer Temperatursteuerung, mechanischer Integrität von Pellets, mechanischer Stabilität von Ausrüstung, Instandhaltung und Wartung, Lieferzeit, einem Ausrüstungshersteller, einem Reinigungsgrad jeder Ausrüstung, einem Betriebsgrad jeder Ausrüstung, einer Auswahl eines Bindemittels für die zu produzierenden Pellets, einer Menge an Bindemittel, die zur Pelletisierung erforderlich ist, und einem Zerstäubungs- oder einem Bindemitteleinbringungsmechanismus umfassen; und

Identifizieren einer optimalen Ausrüstung und einer oder mehrerer assoziierter Betriebsbedingungen für die identifizierte optimale Ausrüstung basierend auf der Rangliste von Ausrüstungen.

7. System nach Anspruch 6, wobei der eine oder die mehreren Parameter einen Durchmesser und einen Gewichtsanteil des Partikels umfassen.

8. System nach Anspruch 6, wobei die Mehrzahl von Betriebsräumen und die assoziierte Partikelgrößenverteilung erhalten werden durch:

Erhalten, durch ein abgestimmtes mechanistisches Modell, das in jedem der Mehrzahl von Ausrüstungssimulatoren enthalten ist, einer oder mehrerer Betriebsbedingungen aus einer Betriebsbedingungsdatenbank;
Simulieren, durch das abgestimmte mechanistische Modell, der Futtergrößenverteilung unter Verwendung der einen oder mehreren Betriebsbedingungen, um eine simulierte Partikelgrößenverteilung zu erhalten, die mit dem Produkt assoziiert ist;
Berechnen einer mittleren Partikelgröße und einer Standardabweichung basierend auf der simulierten Partikelgrößenverteilung;
Durchführen eines ersten Vergleichs der mittleren Partikelgröße und einer assoziierten mittleren Partikelgröße, die in der Produktspezifikation enthalten sind, mit einem vordefinierten Schwellenwert;
Durchführen eines zweiten Vergleichs der berechneten Standardabweichung und einer vordefinierten Standardabweichung basierend auf dem ersten Vergleich; und
Erhalten der Mehrzahl von Betriebsräumen und der assoziierten Partikelgrößenverteilung von der Mehrzahl von Ausrüstungssimulatoren basierend auf dem zweiten Vergleich.

9. System nach Anspruch 6, wobei jede Ausrüstung aus der Rangliste von Ausrüstungen mit einer Ausrüstungsbewertung assoziiert ist.

10. System nach Anspruch 9, wobei die Ausrüstungsbewertung auf dem einen oder den mehreren assoziierten Ausrüstungskriterien basiert.

11. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:

Empfangen, durch eine Mehrzahl von Ausrüstungssimulatoren, i) einer Futtergrößenverteilung, die mit einem Futter assoziiert ist, und ii) einer Produktspezifikation, wobei die Futtergrößenverteilung auf einem oder mehreren Parametern von darin enthaltenen Partikeln basiert;
Verarbeiten, unter Verwendung der Mehrzahl von Ausrüstungssimulatoren, der Futtergrößenverteilung und der Produktspezifikation, um eine Mehrzahl von Betriebsräumen und eine Partikelgrößenverteilung zu erhalten, wobei sich Betriebsräume auf eine Kombination von zwei oder mehr Betriebsbedingungen der Ausrüstung beziehen, wobei jeder Betriebsraum unter der Mehrzahl von Betriebsräumen mit einem Ausrüstungssimulator unter der Mehrzahl von Ausrüstungssimulatoren assoziiert ist, und wobei jeder Ausrüstungssimulator unter der Mehrzahl von Ausrüstungssimulatoren mit einer Ausrüstung assoziiert ist;
Verarbeiten der Mehrzahl von Betriebsräumen und der Partikelgrößenverteilung basierend auf einem oder mehreren Ausrüstungskriterien, um eine Rangliste von Ausrüstungen zu erhalten, die mit der Mehrzahl von Ausrüstungssimulatoren assoziiert sind, wobei die Ausrüstungskriterien mindestens eines von einer Pelletgröße, einer Pelletgrößenverteilung, einer Pelletform und einem Konformitätsstatus jeder Ausrüstung mit einer Konformitätsentität, Leistung jeder Ausrüstung mit einer oder mehreren Anwendungsprogrammierschnittstellen, APIs, einer Ausrüstungskapazität, Ausrüstungskosten, Machbarkeit einer Beschichtung, die mit Pellets assoziiert ist, die durch jede Ausrüstung hergestellt werden sollen, einer Temperatursteuerung, mechanischer Integrität von Pellets, mechanischer Stabilität von Ausrüstung, Instandhaltung und Wartung, Lieferzeit, einem Ausrüstungshersteller, einem Reinigungsgrad jeder Ausrüstung, einem Betriebsgrad jeder Ausrüstung, einer Auswahl eines Bindemittels für die zu produzierenden Pellets, einer Menge an Bindemittel, die zur Pelletisierung erforderlich ist, und einem Zerstäubungs- oder einem Bindemitteleinbringungsmechanismus umfassen; und
Identifizieren einer optimalen Ausrüstung und einer oder mehrerer assoziierter Betriebsbedingungen für die identifizierte optimale Ausrüstung basierend auf der Rangliste von Ausrüstungen.

12. Ein oder mehrere nichtflüchtige maschinenlesbare Informationsspeichermedien nach Anspruch 11, wobei der eine oder die mehreren Parameter einen Durchmesser und einen Gewichtsanteil des Partikels umfassen.

**13.** Ein oder mehrere nichtflüchtige maschinenlesbare Informationsspeichermedien nach Anspruch 11, wobei der Schritt des Verarbeitens der Futtergrößenverteilung und der Produktspezifikation, um die Mehrzahl von Betriebsräumen zu erhalten, umfasst:

Erhalten, durch ein abgestimmtes mechanistisches Modell, das in jedem der Mehrzahl von Ausrüstungssimulatoren enthalten ist, einer oder mehrerer Betriebsbedingungen aus einer Betriebsbedingungsdatenbank;

Simulieren, durch das abgestimmte mechanistische Modell, der Futtergrößenverteilung unter Verwendung der einen oder mehreren Betriebsbedingungen, um eine simulierte Partikelgrößenverteilung zu erhalten, die mit dem Produkt assoziiert ist;

Berechnen einer mittleren Partikelgröße und einer Standardabweichung basierend auf der simulierten Partikelgrößenverteilung;

Durchführen eines ersten Vergleichs der mittleren Partikelgröße und einer assoziierten mittleren Partikelgröße, die in der Produktspezifikation enthalten sind, mit einem vordefinierten Schwellenwert;

Durchführen eines zweiten Vergleichs der berechneten Standardabweichung und einer vordefinierten Standardabweichung; und

Erhalten der Mehrzahl von Betriebsräumen und der assoziierten Partikelgrößenverteilung von der Mehrzahl von Ausrüstungssimulatoren basierend auf dem zweiten Vergleich.

**14.** Ein oder mehrere nichtflüchtige maschinenlesbare Informationsspeichermedien nach Anspruch 11, wobei jede Ausrüstung aus der Rangliste von Ausrüstungen mit einer Ausrüstungsbewertung assoziiert ist.

**15.** Ein oder mehrere nichtflüchtige maschinenlesbare Informationsspeichermedien nach Anspruch 14, wobei die Ausrüstungsbewertung auf dem einen oder den mehreren assoziierten Ausrüstungskriterien basiert.

## Revendications

**1.** Procédé mis en oeuvre par processeur, comprenant :

la réception, par une pluralité de simulateurs d'équipement via un ou plusieurs processeurs matériels, i) d'une distribution de taille d'alimentation associée à une alimentation, et ii) d'une spécification de produit (202), dans lequel la distribution de taille d'alimentation est basée sur un ou plusieurs paramètres de particules comprises dans celle-ci ;

le traitement, en utilisant la pluralité de simulateurs d'équipement via les un ou plusieurs processeurs matériels, de la distribution de taille d'alimentation et de la spécification de produit pour obtenir une pluralité d'espaces de fonctionnement et une distribution de taille de particule (204), dans lequel des espaces de fonctionnement font référence à une combinaison de deux conditions de fonctionnement ou plus de l'équipement, dans lequel chaque espace de fonctionnement parmi la pluralité d'espaces de fonctionnement est associé à un simulateur d'équipement parmi la pluralité de simulateurs d'équipement, et dans lequel chaque simulateur d'équipement parmi la pluralité de simulateurs d'équipement est associé à un équipement ;

le traitement, via les un ou plusieurs processeurs matériels, de la pluralité d'espaces de fonctionnement et de la distribution de taille de particule sur la base d'un ou plusieurs critères d'équipement pour obtenir une liste classée d'équipements associés à la pluralité de simulateurs d'équipement (206), dans lequel les critères d'équipement comprennent au moins l'un parmi une taille de pastille, une distribution de taille de pastille, une forme de pastille, et un statut de conformité de chaque équipement avec une entité de conformité, une performance de chaque équipement avec une ou plusieurs interfaces de programmation d'application, API, une capacité d'équipement, un coût d'équipement, une faisabilité de revêtement associée à des pastilles devant être produites par chaque équipement, un contrôle de température, une intégrité mécanique de pastilles, une stabilité mécanique d'équipement, une maintenance et un entretien, un temps de livraison, un fabricant d'équipement, un niveau de nettoyage de chaque équipement, un niveau de fonctionnement de chaque équipement, un choix d'un liant pour les pastilles devant être produites, une quantité de liant requise pour la pastillage, et un mécanisme d'atomisation ou d'introduction de liant ; et

l'identification, via les un ou plusieurs processeurs matériels, d'un équipement optimal et d'une ou plusieurs conditions de fonctionnement associées pour l'équipement optimal identifié sur la base de la liste classée d'équipements (208).

**2.** Procédé mis en oeuvre par processeur selon la revendication 1, dans lequel les un ou plusieurs paramètres comprennent un diamètre et une fraction de poids de la particule.

**3.** Procédé mis en oeuvre par processeur selon la revendication 1, dans lequel l'étape de traitement de la distribution de taille d'alimentation et de la spécification de produit pour obtenir la pluralité d'espaces de fonctionnement comprend :

l'obtention, par un modèle mécanisé accordé compris dans chacun de la pluralité de simulateurs d'équipement, d'une ou plusieurs conditions de fonctionnement à partir d'une base de données de conditions de fonctionnement (204a) ;

la simulation, par le modèle mécanisé accordé, de la distribution de taille d'alimentation en utilisant les une ou plusieurs conditions de fonctionnement pour obtenir une distribution de taille de particule simulée associée au produit (204b) ;

le calcul d'une taille de particule moyenne et d'un écart-type sur la base de la distribution de taille de particule simulée (204c) ;

la réalisation d'une première comparaison de la taille de particule moyenne et d'une taille de particule moyenne associée comprises dans la spécification de produit avec un seuil prédéfini (204d) ;

la réalisation d'une seconde comparaison de l'écart-type calculé et d'un écart-type prédéfini (204e) ; et

l'obtention de la pluralité d'espaces de fonctionnement et de la distribution de taille de particule associée à partir de la pluralité de simulateurs d'équipement sur la base de la seconde comparaison (204f).

**4.** Procédé mis en oeuvre par processeur selon la revendication 1, dans lequel chaque équipement de la liste classée d'équipements est associé à un score d'équipement.

**5.** Procédé mis en oeuvre par processeur selon la revendication 4, dans lequel le score d'équipement est basé sur les un ou plusieurs critères d'équipement associés.

**6.** Système (100), comprenant :

une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :

recevoir, par une pluralité de simulateurs d'équipement, i) une distribution de taille d'alimentation associée à une alimentation, et ii) une spécification de produit, dans lequel la distribution de taille d'alimentation est basée sur un ou plusieurs paramètres de particules comprises dans celle-ci ;

traiter, en utilisant la pluralité de simulateurs d'équipement, la distribution de taille d'alimentation et la spécification de produit pour obtenir une pluralité d'espaces de fonctionnement et une distribution de taille de particule, dans lequel des espaces de fonctionnement font référence à une combinaison de deux conditions de fonctionnement ou plus de l'équipement, dans lequel chaque espace de fonctionnement parmi la pluralité d'espaces de fonctionnement est associé à un simulateur d'équipement parmi la pluralité de simulateurs d'équipement, et dans lequel chaque simulateur d'équipement parmi la pluralité de simulateurs d'équipement est associé à un équipement ;

traiter la pluralité d'espaces de fonctionnement et la distribution de taille de particule sur la base d'un critère d'équipement associé pour obtenir une liste classée d'équipements avec la pluralité de simulateurs d'équipement, dans lequel le critère d'équipement comprend au moins l'un parmi une taille de pastille, une distribution de taille de pastille, une forme de pastille, et un statut de conformité de chaque équipement avec une entité de conformité, une performance de chaque équipement avec une ou plusieurs interfaces de programmation d'application, API, une capacité d'équipement, un coût d'équipement, une faisabilité de revêtement associée à des pastilles à produire par chaque équipement, un contrôle de température, une intégrité mécanique de pastilles, une stabilité mécanique d'équipement, une maintenance et un entretien, un temps de livraison, un fabricant d'équipement, un niveau de nettoyage de chaque équipement, un niveau de fonctionnement de chaque équipement, un choix d'un liant pour les pastilles à produire, une quantité de liant requise pour la granulation, et un mécanisme d'atomisation ou d'introduction de liant ; et

identifier un équipement optimal et une ou plusieurs conditions de fonctionnement associées pour l'équipement optimal identifié sur la base de la liste classée d'équipements.

**7.** Système selon la revendication 6, dans lequel les un ou plusieurs paramètres comprennent un diamètre et une fraction de poids de la particule.

8. Système selon la revendication 6, dans lequel la pluralité d'espaces de fonctionnement et la distribution de taille de particule associée sont obtenus par :

l'obtention, par un modèle mécanisé accordé compris dans chacun de la pluralité de simulateurs d'équipement, d'une ou plusieurs conditions de fonctionnement à partir d'une base de données de conditions de fonctionnement ;
la simulation, par le modèle mécanisé accordé, de la distribution de taille d'alimentation en utilisant les une ou plusieurs conditions de fonctionnement pour obtenir une distribution de taille de particule simulée associée au produit ;
le calcul d'une taille de particule moyenne et d'un écart-type sur la base de la distribution de taille de particule simulée ;
la réalisation d'une première comparaison de la taille de particule moyenne et d'une taille de particule moyenne associée comprises dans la spécification de produit avec un seuil prédéfini ;
la réalisation d'une seconde comparaison de l'écart-type calculé et d'un écart-type prédéfini, sur la base de la première comparaison ; et
l'obtention de la pluralité d'espaces de fonctionnement et de la distribution de taille de particule associée à partir de la pluralité de simulateurs d'équipement sur la base de la seconde comparaison.

9. Système selon la revendication 6, dans lequel chaque équipement de la liste classée d'équipements est associé à un score d'équipement.

10. Système selon la revendication 9, dans lequel le score d'équipement est basé sur les un ou plusieurs critères d'équipement associés.

11. Un ou plusieurs supports de stockage d'informations lisibles par machine non transitoires comprenant une ou plusieurs instructions qui, lorsqu'elles sont exécutées par un ou plusieurs processeurs matériels, amènent :

la réception, par une pluralité de simulateurs d'équipement, i) d'une distribution de taille d'alimentation associée à une alimentation, et ii) d'une spécification de produit, dans lequel la distribution de taille d'alimentation est basée sur un ou plusieurs paramètres de particules comprises dans celle-ci ;
le traitement, en utilisant la pluralité de simulateurs d'équipement, de la distribution de taille d'alimentation et de la spécification de produit pour obtenir une pluralité d'espaces de fonctionnement et une distribution de taille de particule, dans lequel des espaces de fonctionnement font référence à une combinaison de deux conditions de fonctionnement ou plus de l'équipement, dans lequel chaque espace de fonctionnement parmi la pluralité d'espaces de fonctionnement est associé à un simulateur d'équipement parmi la pluralité de simulateurs d'équipement, et dans lequel chaque simulateur d'équipement parmi la pluralité de simulateurs d'équipement est associé à un équipement ;
le traitement de la pluralité d'espaces de fonctionnement et de la distribution de taille de particule sur la base d'un ou plusieurs critères d'équipement pour obtenir une liste classée d'équipements associés à la pluralité de simulateurs d'équipement, dans lequel les critères d'équipement comprennent au moins l'un parmi une taille de pastille, une distribution de taille de pastille, une forme de pastille, et un statut de conformité de chaque équipement avec une entité de conformité, une performance de chaque équipement avec une ou plusieurs interfaces de programmation d'application, API, une capacité d'équipement, un coût d'équipement, une faisabilité de revêtement associée à des pastilles à produire par chaque équipement, un contrôle de température, une intégrité mécanique de pastilles, une stabilité mécanique d'équipement, une maintenance et un entretien, un temps de livraison, un fabricant d'équipement, un niveau de nettoyage de chaque équipement, un niveau de fonctionnement de chaque équipement, un choix d'un liant pour les pastilles à produire, une quantité de liant requise pour la granulation, et un mécanisme d'atomisation ou d'introduction de liant ; et
l'identification d'un équipement optimal et d'une ou plusieurs conditions de fonctionnement associées pour l'équipement optimal identifié sur la base de la liste classée d'équipements.

12. Un ou plusieurs supports de stockage d'informations lisibles par machine non transitoires selon la revendication 11, dans lequel les un ou plusieurs paramètres comprennent un diamètre et une fraction de poids de la particule.

13. Un ou plusieurs supports de stockage d'informations lisibles par machine non transitoires selon la revendication 11, dans lequel l'étape de traitement de la distribution de taille d'alimentation et de la spécification de produit pour obtenir la pluralité d'espaces de fonctionnement comprend :

l'obtention, par un modèle mécanisé accordé compris dans chacun de la pluralité de simulateurs d'équipement, d'une ou plusieurs conditions de fonctionnement à partir d'une base de données de conditions de fonctionnement ;

la simulation, par le modèle mécanisé accordé, de la distribution de taille d'alimentation en utilisant les une ou plusieurs conditions de fonctionnement pour obtenir une distribution de taille de particule simulée associée au produit ;

le calcul d'une taille de particule moyenne et d'un écart-type sur la base de la distribution de taille de particule simulée ;

la réalisation d'une première comparaison de la taille de particule moyenne et d'une taille de particule moyenne associée comprises dans la spécification de produit avec un seuil prédéfini ;

la réalisation d'une seconde comparaison de l'écart-type calculé et d'un écart-type prédéfini ; et

l'obtention de la pluralité d'espaces de fonctionnement et de la distribution de taille de particule associée à partir de la pluralité de simulateurs d'équipement sur la base de la seconde comparaison.

14. Un ou plusieurs supports de stockage d'informations lisibles par machine non transitoires selon la revendication 11, dans lequel chaque équipement de la liste classée d'équipements est associé à un score d'équipement.

15. Un ou plusieurs supports de stockage d'informations lisibles par machine non transitoires selon la revendication 14, dans lequel le score d'équipement est basé sur les un ou plusieurs critères d'équipement associés.

SYSTEM
100

MEMORY
102

DATABASE
108

HARDWARE
PROCESSOR(S)
104

INTERFACE(S)
106

**FIG. 1**

FIG. 2

receiving, by a plurality of equipment simulators via one or more hardware processors, (i) a feed size distribution associated with a feed, and (ii) a specification associated with a product, wherein the feed size distribution is based on one or more parameters of particles comprised therein ⌒ 202

processing, by using the plurality of equipment simulators via the one or more hardware processors, the feed size distribution and the specification to obtain a plurality of operating spaces and an associated particle size distribution, wherein each operating space is associated with an equipment simulator amongst the plurality of equipment simulators, and wherein each equipment simulator amongst the plurality of equipment simulators is associated with an equipment ⌒ 204

processing, via the one or more hardware processors, the plurality of operating spaces and the associated particle size distribution based on one or more associated equipment criteria to obtain a ranked list of equipment associated with the plurality of equipment simulators ⌒ 206

identifying, via the one or more hardware processors, an optimal equipment and one or more associated operating conditions for the identified optimal equipment based on the ranked list of equipment ⌒ 208

**FIG. 3**

**Particle Size Distribution**

FIG. 4

**Particle Size Distribution (Cumulative)**

FIG. 5

obtaining, by a tuned mechanistic model comprised in each of the plurality of equipment simulators, one or more operating conditions from an operating condition database ⌐∿204a

↓

simulating, by the mechanistic model, the feed size distribution using the one or more operating conditions to obtain a simulated particle size distribution associated with the product ⌐∿204b

↓

calculating a mean particle size and a standard deviation based on the simulated particle size distribution ⌐∿204c

↓

performing a first comparison of (i) the mean particle size and an associated mean particle size comprised in the specification of the product with (ii) a pre-defined threshold ⌐∿204d

↓

performing a second comparison of (i) the calculated standard deviation and (ii) a pre-defined standard deviation, based on the first comparison ⌐∿204e

↓

obtaining the plurality of operating spaces and the associated particle size distribution from the plurality of equipment simulators based on the second comparison ⌐∿204f

## FIG. 6

Off-line experimentation and analysis          Development of Predictive model

FIG. 7

| Binder-feed ratio | | Design of Experiments | | Speed of agitation |
|---|---|---|---|---|
| Binder concentration | | | | Time of operation |
| Binder-feed interaction | | | | Pressure and Temperature |

FIG. 8

FIG. 9

**FIG. 10A**

**FIG. 10B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221070709
- US 2009299509 A1
- US 2022207217 A1